(19) **Europäisches Patentamt / European Patent Office / Office européen des brevets**

(11) **EP 2 728 552 A2**

(12) **EUROPEAN PATENT APPLICATION**

(43) Date of publication:
**07.05.2014 Bulletin 2014/19**

(21) Application number: **13191521.7**

(22) Date of filing: **05.11.2013**

(51) Int Cl.:
**G06T 17/10** (2006.01)     **G06T 17/30** (2006.01)
**G06T 17/20** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.11.2012 US 201213669511**

(71) Applicant: **Biosense Webster (Israel), Ltd.
Yokneam 20692 (IL)**

(72) Inventors:
- **Massarwa, Fady
  30100 Baka El Gharbiya (IL)**
- **Ilan, Ido
  20692 Yokneam (IL)**
- **Shemesh, Toam
  46249 Herzliya (IL)**

(74) Representative: **Carpmaels & Ransford LLP
One Southampton Row
London WC1B 5HA (GB)**

(54) **Combining three-dimensional surfaces**

(57)     A method for mapping, including measuring coordinates of a first set of points on a first surface of a first portion of a three-dimensional (3D) element and generating a first volume enclosed by the first set of points. The method also includes measuring coordinates of a second set of points on a second surface of a second portion of the 3D element and generating a second volume enclosed by the second set of points. The method continues by connecting the first and second volumes to form a combined volume, and generating coordinates of a third set of points on a third surface of the combined volume to form a 3D surface map of the element.

FIG. 4

EP 2 728 552 A2

**(Cont. next page)**

170 ($V_1$ U $V_2$)

180

182 ($S_3$)

FIG. 6

## Description

## FIELD OF THE INVENTION

The present invention relates generally to graphic displays, and specifically to combining two or more three-dimensional (3D) surfaces to produce a single 3D display.

## BACKGROUND OF THE INVENTION

While the surface of a three-dimensional (3D) element may be mapped, by a variety of procedures, in a single mapping operation, there are many situations where two or more mapping operations are performed on different portions of the element. In these latter cases the surfaces mapped in the different operations need to be combined in order to produce a more complete 3D map of the element. A method for efficiently combining the surfaces would be advantageous.

## SUMMARY OF THE INVENTION

An embodiment of the present invention provides a method for mapping, including:

measuring coordinates of a first set of points on a first surface of a first portion of a three-dimensional (3D) element;
generating a first volume enclosed by the first set of points;
measuring coordinates of a second set of points on a second surface of a second portion of the 3D element;
generating a second volume enclosed by the second set of points;
connecting the first and second volumes to form a combined volume; and
generating coordinates of a third set of points on a third surface of the combined volume to form a 3D surface map of the element.

Typically, connecting the first and second volumes includes forming a union of the first volume with the second volume. Generating the coordinates of the third set of points may include covering the union with the third surface.

In a disclosed embodiment an intersection of the first volume and the second volume includes a non-null set.

In an alternative embodiment generating the first volume includes forming a first surface from the first set of points and filling a first space enclosed by the first surface, and generating the second volume includes forming a second surface from the second set of points and filling a second space enclosed by the second surface. Typically, filling the first space includes closing at least one first opening in the first surface to form a closed first surface, and filling the second space includes closing at least one second opening in the second surface to form a closed second surface.

In the alternative embodiment generating the coordinates of the third set of points may include covering a union of the first and second volumes to form the third surface, and opening the at least one first opening and the at least one second opening in the third surface to form the 3D surface map.

Typically, the 3D element includes at least a part of an organ of a human person. The organ may include a heart.

There is further provided, according to an embodiment of the present invention, apparatus for mapping, including:

a probe which is configured to measure coordinates of a first set of points on a first surface of a first portion of a three-dimensional (3D) element, and to measure coordinates of a second set of points on a second surface of a second portion of the 3D element; and
a processor which is configured to:

generate a first volume enclosed by the first set of points,
generate a second volume enclosed by the second set of points,
connect the first and second volumes to form a combined volume; and
generate coordinates of a third set of points on a third surface of the combined volume to form a 3D surface map of the element.

The present disclosure will be more fully understood from the following detailed description of the embodiments thereof, taken together with the drawings, in which:

## BRIEF DESCRIPTION OF THE DRAWINGS

Fig. 1 is a schematic illustration of a three-dimensional (3D) surface combining system, according to an embodiment of the present invention;

Fig. 2A is a schematic illustration of a first set of points derived from measurements of locations of the surface of a first right atrium portion of a heart, according to an embodiment of the present invention;

Fig. 2B is a schematic diagram illustrating conversion of the set of Fig. 2A into a mesh, according to an embodiment of the present invention;

Fig. 2C is a schematic diagram illustrating conversion of the mesh of Fig. 2B into a surface, according to an embodiment of the present invention;

Fig. 2D is a schematic illustration of a volume produced from the surface of Fig. 2C, according to an embodiment of the present invention;

Fig. 3 is a schematic illustration of a second set of points derived from measurements of locations of the surface of a second right atrium portion of the heart, according to an embodiment of the present invention;

Fig. 4 is a flowchart showing steps performed by a processor in connecting surfaces, according to an embodiment of the present invention;

Fig. 5 illustrates some of the steps of the flowchart of Fig. 4, according to an embodiment of the present invention; and

Fig. 6 illustrates another step of the flowchart of Fig. 4, according to an embodiment of the present invention.

## DETAILED DESCRIPTION OF EMBODIMENTS

OVERVIEW

An embodiment of the present invention provides a method for efficiently combining three-dimensional (3D) surfaces. The surfaces combined are typically partial 3D surfaces of an object, such as of at least a part of an organ of the human body. In the following description the surfaces being combined are assumed, by way of example, to comprise two partially mapped surfaces of the right atrium of the heart.

To generate a first partially mapped surface, coordinates of a first set of points on the right atrium are measured. A first volume is formed by filling the space enclosed by the first set of points. Similarly, to generate a second partially mapped surface, coordinates of a second set of points on the right atrium are measured and a second volume is formed by filling the space enclosed by the second set of points.

The two volumes are formed as respective sets of volume elements or voxels. The two volumes are connected, typically by forming a union of the two sets, to form a combined volume. Usually, the two volumes have a significant overlap, i.e., the intersection of the two volumes is not a null set, so that the number of voxels in the union is less than a sum of the numbers of voxels in the two separate volumes.

Once the combined volume has been formed, it is used to generate coordinates of a third set of points of a third surface covering the combined volume. The third surface effectively combines the first and second surfaces, and forms a 3D surface map of the object.

Combining surfaces by the method described herein is an efficient process for combining partial surfaces of an object. The method may be performed more simply than prior art methods of combining surfaces, such as those which stitch surfaces together, with no loss of accuracy.

SYSTEM DESCRIPTION

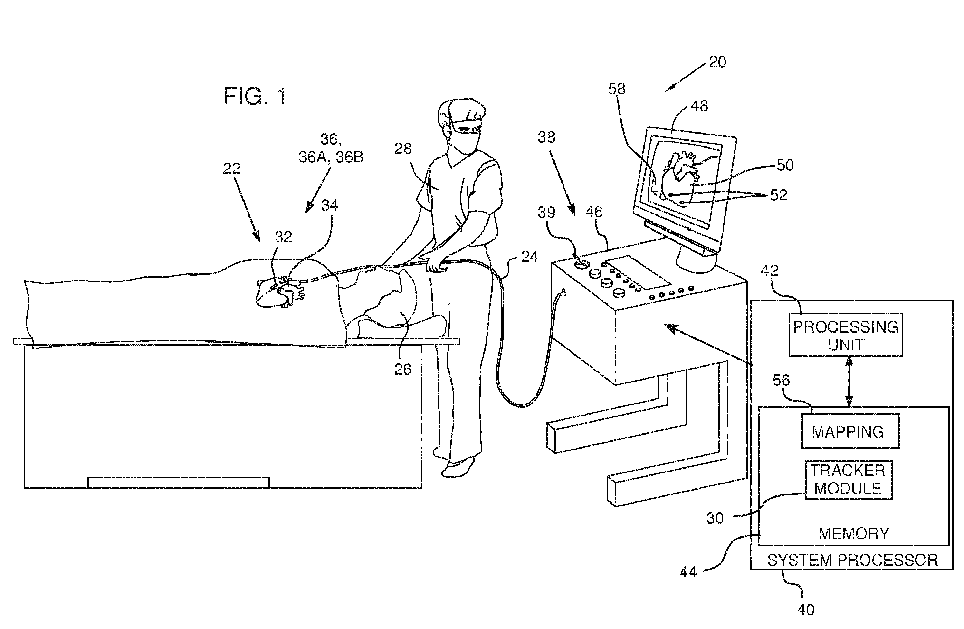

Reference is now made to Fig. 1, which is a schematic illustration of a three-dimensional (3D) surface combining system 20, according to an embodiment of the present invention. In the description herein, examples of surfaces combined by system 20 are assumed to comprise surfaces associated with organs of the human body. Furthermore, 3D surface combining system 20 is assumed to be configured to map an organ of the human body. However, system 20 may be configured, *mutatis mutandis,* to combine substantially any 3D surfaces.

For simplicity and clarity, the following description, except where otherwise stated, assumes an investigative procedure wherein system 20 performs measurements on a human body organ 34, herein assumed to comprise a heart, using a probe 24.

Typically, probe 24 comprises a catheter which is inserted into the body of a subject 26 during a mapping procedure performed by a user 28 of system 20. In the description herein user 28 is assumed, by way of example, to be a medical professional.

System 20 may be controlled by a system processor 40, comprising a processing unit 42 communicating with a memory 44. Processor 40 is typically mounted in a console 46, which comprises operating controls 38, typically including a pointing device 39 such as a mouse or trackball, that professional 28 uses to interact with the processor. Results of the operations performed by processor 40 are provided to the professional on a screen 48 which displays a three-dimensional (3D) map 50 of the heart. The screen typically displays other items 52 of auxiliary information related to the heart and superimposed on the map, while the heart is being investigated, such as the positions of catheters used by professional 28.

Professional 28 is able to use pointing device 39 to vary parameters of the frame of reference, so as to display the resultant map in a selected orientation and/or at a selected magnification.

Screen 48 typically also presents a graphic user interface to the user.

Processor 40 uses software, including a probe tracker module 30 stored in memory 44, to operate system 20. The software may be downloaded to processor 40 in electronic form, over a network, for example, or it may, alternatively or additionally, be provided and/or stored on non-transitory tangible media, such as magnetic, optical, or electronic memory.

Probe tracker module 30 tracks both the location and orientation of distal end 32 of probe 24, within the heart of subject 26. The location and orientation coordinates are assumed to be stored in a mapping module 56. The tracker module may use any method for tracking probes known in the art. For example, module 30 may operate magnetic field transmitters in the vicinity of the subject, so that magnetic fields from the transmitters interact with tracking coils located in sections of the probe being tracked. The coils interacting with the magnetic fields generate signals which are transmitted to the module, and the module analyzes the signals to determine a location and orientation of the coils. (For simplicity such coils and transmitters are not shown in Fig. 1.)

The Carto® system produced by Biosense Webster, of Diamond Bar, CA, uses such a tracking method. Alternatively or additionally, tracker module 30 may track distal end 32 by measuring impedances between an electrode on the distal end and electrodes on the skin of subject 26. The Carto3® system produced by Biosense Webster uses both magnetic field transmitters and impedance measurements for tracking. By way of example tracking module 30 is assumed to be used to map in three dimensions portions of the surface of an element 36 of heart 34. For clarity, in the following description element 36 is considered to be the right atrium, which is mapped as a first right atrium portion 36A and a second right atrium portion 36B.

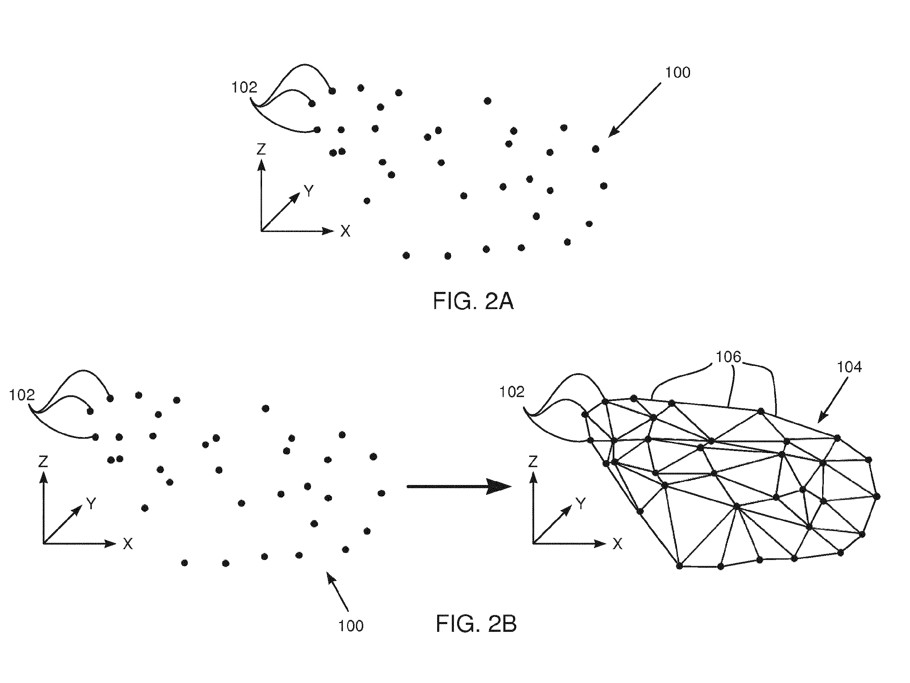

Fig. 2A is a schematic illustration of a first set 100 of points derived from measurements of locations of the surface of first right atrium portion 36A of heart 34, according to an embodiment of the present invention. Typically, to prepare set 100, user 28 moves the distal end of catheter 24 to touch different regions of the heart wall at points 102 within right atrium 36. Processor 40 uses tracker module 30 to evaluate the location coordinates of points 102, also herein termed locations 102. The location coordinates are assumed to be measured with respect to an orthogonal set of (x,y,z) axes. Since the location coordinates typically vary due to the heart beating, the processor also gates the location coordinates, i.e., identifies the location of a given point 102 on the heart wall at a predetermined point in time of the heartbeat. Each location 102 is assumed to be at the center of a corresponding volume element or voxel (not shown in the diagram).

Fig. 2B is a schematic diagram illustrating conversion of set 100 into a mesh, according to an embodiment of the present invention. As illustrated by Fig. 2B, processor 40 uses mapping module 56 to initially connect locations 102 as a mesh 104 of line segments 106, the mesh typically, although not necessarily, being a triangular mesh. In one embodiment, processor 40 uses the Ball-Pivoting Algorithm (BPA) to produce mesh 104. Typically, if the BPA is used, a size of the ball is set to correspond to the size of the voxels referred to above. In an alternative embodiment, mesh 104 may be generated as a Delaunay triangulation, comprising a plurality of triangles having vertices corresponding to points 102. The triangles of the triangulation may be based on Voronoi diagrams formed about points 102. However, processor 40 may use any convenient method that is known in the art for forming mesh 104.

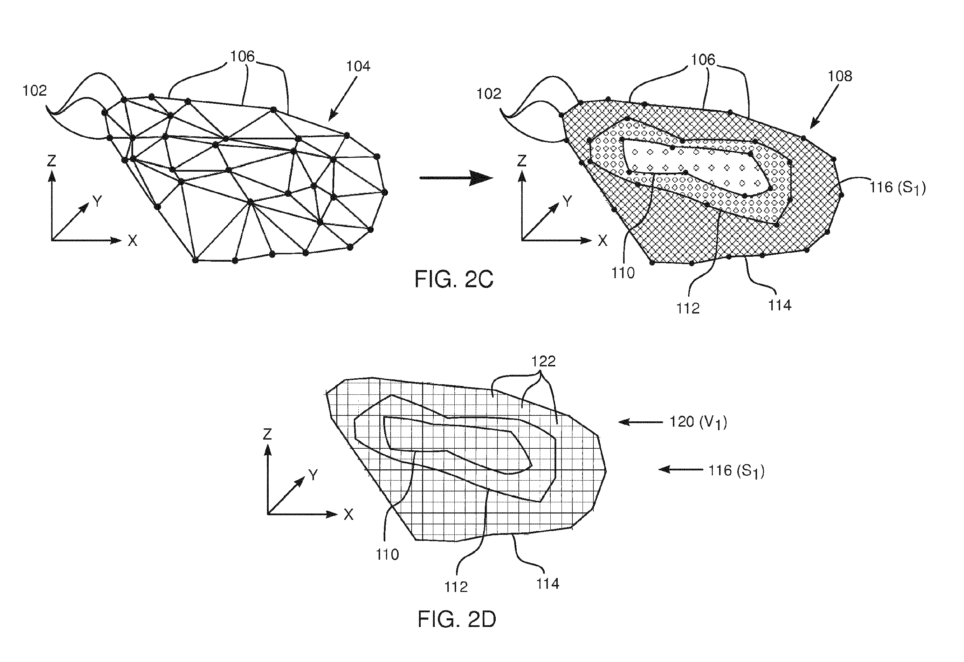

Fig. 2C is a schematic diagram illustrating conversion of mesh 104 into a surface, according to an embodiment of the present invention. After producing mesh 104, processor 40 generates a generally smooth surface 108 connecting points 102 and line segments 106. To generate the surface, the processor typically uses interpolation and/or extrapolation. In addition, to ensure that surface 108 is generally smooth, the processor may adjust the surface so as to be close to, but not necessarily include, some of points 102 and/or line segments 106. By way of example, surface 108 has contours 110, 112, 114 drawn on the surface.

After generating surface 108, the processor checks if the surface is closed, i.e., if the surface is topologically equivalent to a closed surface such as a sphere. Typically, surface 108 is not closed, having one or more openings. The openings in surface 108 may be those which naturally occur in the organ, such as the superior vena cava, or the inferior vena cava of the right atrium. Such openings are herein referred to as natural openings. Additionally, there may be openings in surface 108, herein referred to as artificial openings, because the organ has not been fully mapped.

In the event that surface 108 is not closed, the processor closes the surface by adding further surface elements until the surface is closed. The surface produced by closing surface 108 is herein referred to as closed surface 116. In one embodiment an opening is closed by adding an oriented bounding box that surrounds the opening, the box having a minimal volume. The box is then treated as part of the surface.

Surface 116 is assumed to have a defining equation:

$$S_1(x, y, z) = 0 \qquad\qquad (1)$$

where $S_1$ is a function.

In the description herein surface 116 is also referred to as surface $S_1$.

Fig. 2D is a schematic illustration of a volume produced from surface 116, according to an embodiment of the present invention. Using surface 116, processor 40 produces a volume 120, comprising voxels 122 which fill the space enclosed by the surface.

Volume $V_1$ may be defined according to expression (2):

$$V_1 = \{V(x, y, z) | S_1(x, y, z) < 0\} \qquad\qquad (2)$$

where $V(x, y, z)$ represents a voxel 122 centered on $(x, y, z)$, and $V_1$ is the volume formed by voxels 122.

Volume 120 is also referred to herein as volume $V_1$.

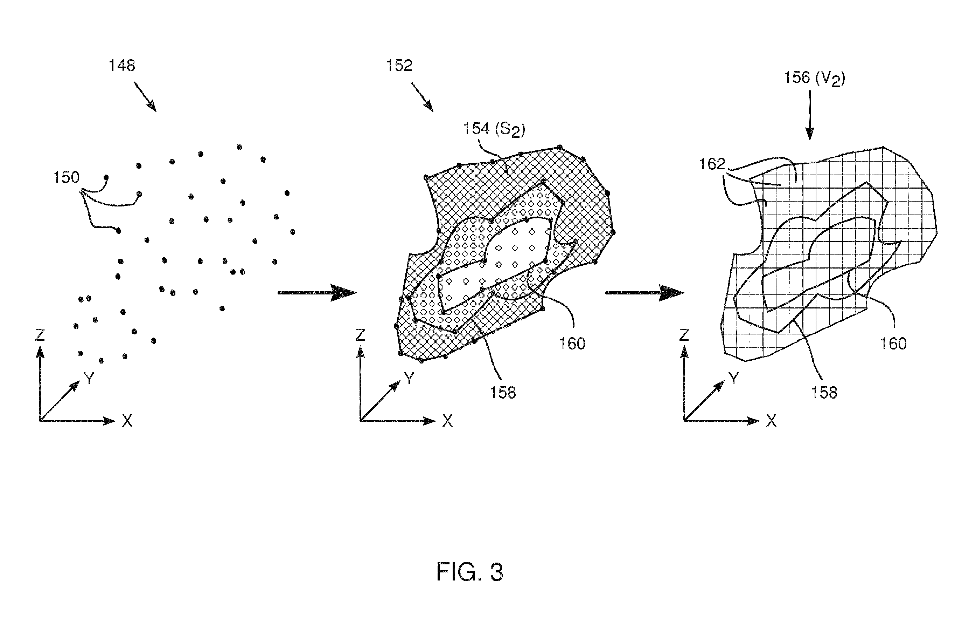

Fig. 3 is a schematic illustration of a second set 148 of points 150 derived from measurements of locations of the surface of second right atrium portion 36B of heart 34, according to an embodiment of the present invention. Fig. 3 also illustrates a second volume 156, produced from points 150, in a manner substantially as described above for volume $V_1$. Thus, a mesh is formed to connect points 150, and a surface 152 is formed from the mesh. A closed surface 154 is generated from surface 152, surface 152 being closed as necessary in order that the surface is topologically equivalent to the surface of a sphere. The space enclosed by closed surface 154, which has contours 158 and 160, is filled. The closed surface is assumed to have a defining equation:

$$S_2(x, y, z) = 0 \qquad\qquad (3)$$

where $S_2$ is a function.

Surface 154 is also referred to herein as surface $S_2$.

From equation (3), an expression for volume 156, the volume filling the space enclosed by surface $S_2$, is given by:

$$V_2 = \{V(x, y, z) | S_2(x, y, z) < 0\} \qquad\qquad (4)$$

where $V(x, y, z)$ represents a voxel 162 centered on $(x, y, z)$, and $V_2$ is the volume formed by voxels 162.

Volume 156 is also referred to herein as volume $V_2$.

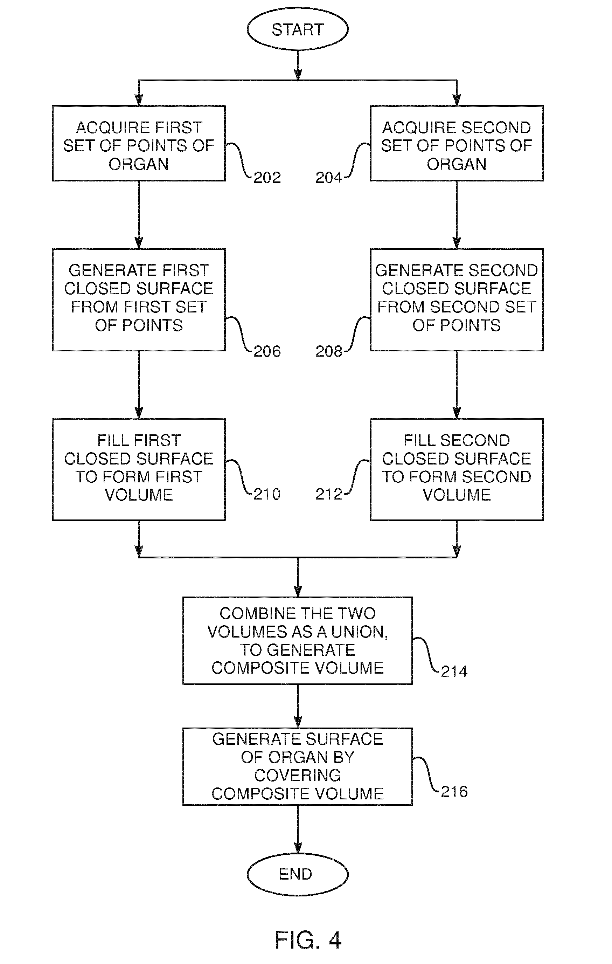

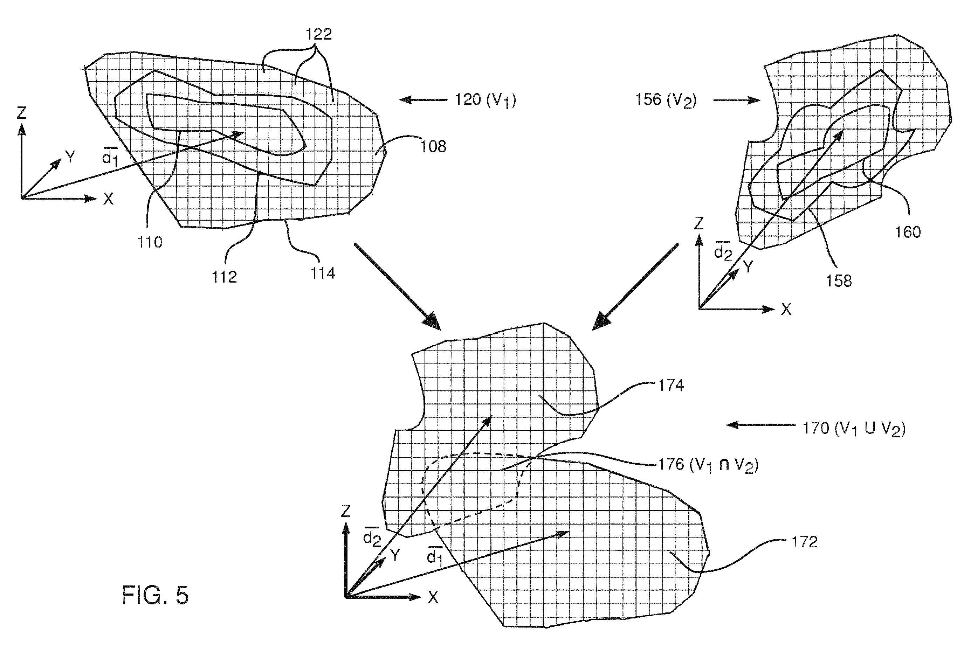

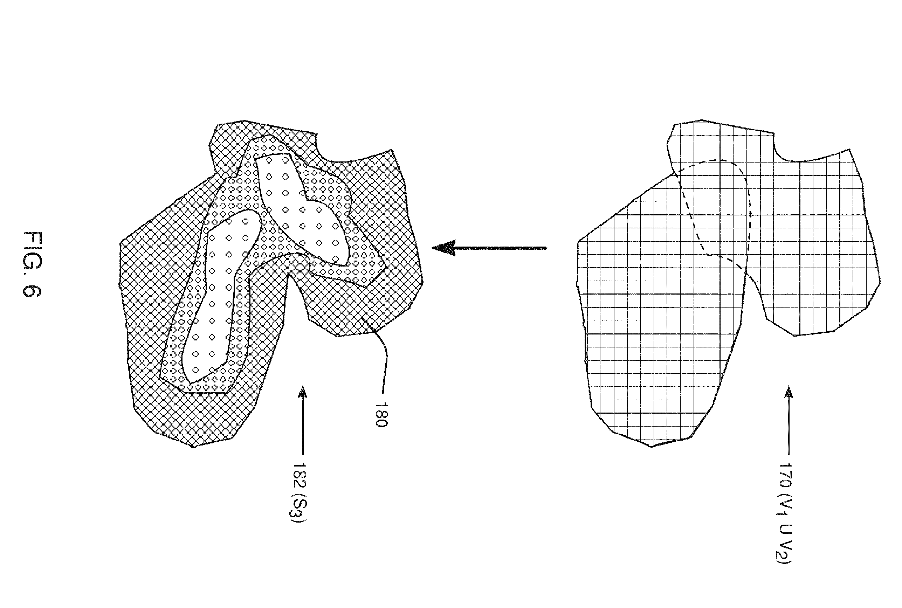

Fig. 4 is a flowchart showing steps performed by processor 40 in connecting surfaces, and Figs. 5 and 6 illustrate some of the steps, according to embodiments of the present invention. For clarity, the description of the steps assumes that surface 108, corresponding to portion 36A of the right atrium, and surface 152, corresponding to portion 36B of the right atrium are to be connected to form a complete surface map 182 of the right atrium.

In a first step 202, processor 40 acquires coordinates of a first set of points, herein assumed to be set 100 of portion 36A. In a parallel first step 204, the processor acquires coordinates of a second set of points, herein assumed to be set 148 of portion 36B. The acquisition is typically as described above with reference to Fig. 1, i.e., by an operator of system 20 maneuvering the distal end of a catheter within an organ to be mapped. It will be understood that each set of measurements in steps 202 and 204 is typically obtained at different time periods, although in some embodiments both sets may be acquired in one time period. Additionally, each set of measurements may have been pre-acquired for later processing.

In a surface generation step 206, the processor transforms the set of points acquired in step 202 into a closed surface, substantially as described with reference to Figs. 2A - 2C, so forming surface 116. In a parallel surface generation step 208, the processor also transforms the set of points acquired in step 204 into a closed surface, substantially as described with reference to the left side of Fig 3, so forming surface 154.

In surface generation steps 206 and 208, the processor records any openings in surface 108 and in surface 152 that need to be closed in order to generate closed surface 116 and closed surface 154. The surfaces are closed, typically by adding bounding boxes to any openings present, as described above.

In a filling step 210, processor 40 fills the space enclosed by the surface generated in step 206, to form a first volume in the form of a first set of voxels. The first volume includes any bounding boxes that have been used to close the surface. As described above with reference to Fig. 2D, filling the space enclosed by surface 116 generates volume $V_1$, comprising voxels 122. In a parallel filling step 212, the processor fills the space enclosed by surface 154 generated in step 208, to form a second volume in the form of a second set of voxels. As for step 210, the second volume includes any bounding boxed used to close surface 154. As described above with reference to the right side of Fig. 3, filling the space enclosed by surface 154 generates volume $V_2$, comprising voxels 150.

In a connecting step 214, illustrated by Fig. 5, the processor combines the two volumes $V_1$ and V2, according to the equation:

$$V = V_1 \ U \ V_2 \qquad\qquad (5)$$

where V is the union of volume $V_1$ with volume $V_2$.

Volume V, corresponding to $V_1$ U $V_2$, is also referred to herein as composite volume 170. The union of the two volumes $V_1$, $V_2$, means that volume V comprises voxels 172 that only occur in volume $V_1$, voxels 174 that only occur in volume $V_2$, and voxels 176 that are common to volume $V_1$ and volume $V_2$. It will be understood that the common voxels (illustrated in Fig. 5 as the set of voxels enclosed by broken lines) comprise the intersection $V_1 \cap V_2$ of the two volumes, i. e., the region where the two volumes overlap.

Typically, the intersection $V_1 \cap V_2$ is not a null set of voxels, i. e., there is at least one voxel present in the intersection. Since in practice the two volumes being combined are based on two surfaces which typically have a relatively large overlap, the intersection $V_1 \cap V_2$ also comprises relatively large numbers of voxels. However, embodiments of the present invention include cases where the intersection is a null set, i.e., where there is no physical intersection.

Processor 40 uses equations (2) and (3), which define the sets of voxels in each volumes $V_1$ and $V_2$ according to their (x, y, z) coordinates, in order to find the voxels in the union.

The upper part of Fig. 5 illustrates volumes $V_1$ and $V_2$ prior to the volumes being combined. The two volumes are illustrated as having arbitrary centers at different displacements $\overline{d_1,d_2}$ from an origin of the coordinate axes used to define the locations of the voxels in the volumes. The lower part of Fig. 5 illustrates the volumes after they have been combined to form composite volume 170, and in the figure, the two sets of axes for the volumes have been drawn as coincident.

In a surface generating step 216, once the union of the two volumes has been formed, processor 40 generates sets of points on a closed surface 180 (Fig. 6) that covers the union $V_1$ U $V_2$. To generate complete surface map 182, also referred to herein as surface $S_3$, of the right atrium, the processor applies any appropriate openings recorded in steps 206 and 208 to closed surface 180. It will be understood that the openings applied to generate surface $S_3$ from closed surface 180 are typically natural openings, rather than artificial openings. In order to generate the surface, the processor may use the Ball-Pivoting Algorithm to first generate a mesh between outer voxels of the union $V_1$ U $V_2$.

While the description above relates generally to combining two surfaces, those of ordinary skill in the art will be able to adapt the description, without undue experimentation, for the combination of three or more surfaces. Embodiments of the present invention thus include the combination of two or more surfaces to generate a complete surface for the multiple surfaces.

It will be appreciated that the embodiments described above are cited by way of example, and that the present invention is not limited to what has been particularly shown and described hereinabove. Rather, the scope of the present invention includes both combinations and subcombinations of the various features described hereinabove, as well as variations and modifications thereof which would occur to persons skilled in the art upon reading the foregoing description and which are not disclosed in the prior art.

**Claims**

1. Apparatus for mapping, comprising:

a probe which is configured to measure coordinates of a first set of points on a first surface of a first portion of a three-dimensional (3D) element, and to measure coordinates of a second set of points on a second surface of a second portion of the 3D element; and
a processor which is configured to:

generate a first volume enclosed by the first set of points,

generate a second volume enclosed by the second set of points,
connect the first and second volumes to form a combined volume; and
generate coordinates of a third set of points on a third surface of the combined volume to form a 3D surface map of the element.

2. A method for mapping, comprising:

measuring coordinates of a first set of points on a first surface of a first portion of a three-dimensional (3D) element;
generating a first volume enclosed by the first set of points;
measuring coordinates of a second set of points on a second surface of a second portion of the 3D element;
generating a second volume enclosed by the second set of points;
connecting the first and second volumes to form a combined volume; and
generating coordinates of a third set of points on a third surface of the combined volume to form a 3D surface map of the element.

3. The apparatus according to claim 1 or the method according to claim 2, wherein connecting the first and second volumes comprises forming a union of the first volume with the second volume.

4. The apparatus or method according to claim 3, wherein generating the coordinates of the third set of points comprises covering the union with the third surface.

5. The apparatus according to claim 1 or the method according to claim 2, wherein an intersection of the first volume and the second volume comprises a non-null set.

6. The apparatus according to claim 1 or the method according to claim 2, wherein generating the first volume comprises forming a first surface from the first set of points and filling a first space enclosed by the first surface, and wherein generating the second volume comprises forming a second surface from the second set of points and filling a second space enclosed by the second surface.

7. The apparatus or method according to claim 6, wherein filling the first space comprises closing at least one first opening in the first surface to form a closed first surface, and wherein filling the second space comprises closing at least one second opening in the second surface to form a closed second surface.

8. The apparatus or method according to claim 7, wherein generating the coordinates of the third set of points comprises covering a union of the first and second volumes to form the third surface, and opening the at least one first opening and the at least one second opening in the third surface to form the 3D surface map.

9. The apparatus according to claim 1 or the method according to claim 2, wherein the 3D element comprises at least a part of an organ of a human person.

10. The apparatus or method according to claim 9, wherein the organ comprises a heart.

FIG. 1

FIG. 2A

FIG. 2B

FIG. 2C

FIG. 2D

FIG. 3

EP 2 728 552 A2

```
                          ┌─────────┐
                          │  START  │
                          └────┬────┘
             ┌─────────────────┴──────────────────┐
             ▼                                     ▼
   ┌──────────────────┐                 ┌──────────────────┐
   │ ACQUIRE FIRST    │                 │ ACQUIRE SECOND   │
   │ SET OF POINTS OF │ 202       204   │ SET OF POINTS OF │
   │ ORGAN            │                 │ ORGAN            │
   └────────┬─────────┘                 └────────┬─────────┘
            ▼                                    ▼
   ┌──────────────────┐                 ┌──────────────────┐
   │ GENERATE FIRST   │                 │ GENERATE SECOND  │
   │ CLOSED SURFACE   │                 │ CLOSED SURFACE   │
   │ FROM FIRST SET   │ 206       208   │ FROM SECOND SET  │
   │ OF POINTS        │                 │ OF POINTS        │
   └────────┬─────────┘                 └────────┬─────────┘
            ▼                                    ▼
   ┌──────────────────┐                 ┌──────────────────┐
   │ FILL FIRST       │                 │ FILL SECOND      │
   │ CLOSED SURFACE   │ 210       212   │ CLOSED SURFACE   │
   │ TO FORM FIRST    │                 │ TO FORM SECOND   │
   │ VOLUME           │                 │ VOLUME           │
   └────────┬─────────┘                 └────────┬─────────┘
            └─────────────────┬──────────────────┘
                              ▼
                   ┌──────────────────────┐
                   │ COMBINE THE TWO      │
                   │ VOLUMES AS A UNION,  │ 214
                   │ TO GENERATE          │
                   │ COMPOSITE VOLUME     │
                   └──────────┬───────────┘
                              ▼
                   ┌──────────────────────┐
                   │ GENERATE SURFACE     │
                   │ OF ORGAN BY          │ 216
                   │ COVERING             │
                   │ COMPOSITE VOLUME     │
                   └──────────┬───────────┘
                              ▼
                          ┌─────────┐
                          │   END   │
                          └─────────┘
```

FIG. 4

FIG. 5

EP 2 728 552 A2

170 (V$_1$ U V$_2$)

180

182 (S$_3$)

FIG. 6